# EUROPÄISCHE PATENTSCHRIFT

(11) **EP 1 442 516 B1**
(45) Veröffentlichungstag und Bekanntmachung des Hinweises auf die Patenterteilung: **09.05.2012**
(21) Anmeldenummer: 02776979.3
(22) Anmeldetag: 04.09.2002
(51) Int. Cl.: H02P 9/30, H02P 9/36, H02K 19/26, F03D 9/00

(54) **WINDENERGIEANLAGE MIT BERÜHRUNGSLOSEN ENERGIEÜBERTRAGUNGSMITTELN AUF DEN ROTOR**
WIND POWER STATION WITH CONTACTLESS POWER TRANSMITTING MEANS IN THE ROTOR
EOLIENNE COMPORTANT DES MOYENS POUR LA TRANSMISSION D'ENERGIE SANS CONTACT AU ROTOR

(30) Priorität: 31.10.2001 DE 10153644
(43) Veröffentlichungstag der Anmeldung: 04.08.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/009864
(87) Internationale Veröffentlichungsnummer: WO 2003/038990

(56) Entgegenhaltungen:
- DE-A- 19 637 146
- DE-A- 19 801 803
- US-A- 4 015 189
- US-A- 5 770 909

## Beschreibung

Die Erfindung betrifft eine Windenergieanlage zur Erzeugung einer sinusförmigen Wechselspannung mit einem einen Läufer und einen Stator aufweisenden Generator, mit einem Rotor mit Rotorblättern, der mit dem Läufer verbunden ist, und mit Energieübertragungsmitteln zur Übertragung von elektrischer Energie vom nicht-drehenden Teil der Windenergieanlage auf den Rotor.

Bei Windenergieanlagen ist es erforderlich, für verschiedene Zwecke auf den drehenden Teil vom nicht-drehenden Teil Energie zu übertragen. Beispielsweise wird bei einem elektromagnetisch erregten Synchrongenerator ein Gleichstrom als Erregerstrom für das Polrad benötigt, und zur Rotorblatteinstellung mittels geeigneter Elektromotoren wird ebenfalls diese elektrische Energie benötigt. Derzeit wird diese mittels Schleifringen von dem nicht-drehenden Teil der Windenergieanlage auf den drehenden Teil übertragen. Schleifringe haben jedoch grundsätzlich den Nachteil, dass aufgrund der Reibung Verluste auftreten, also der Wirkungsgrad, verringert wird, dass eine hohe Geräuschentwicklung entsteht und dass sie insbesondere einen hohen Verschleiß aufweisen, also von Zeit zu Zeit reparaturbedürftig sind bzw. ausgetauscht werden müssen. Außerdem können auch elektrische Überschläge an solchen Schleifringen auftreten. Diese werden durch Abrieb von Partikeln sogar mit zunehmender Betriebsdauer noch begünstigt.

Aus der DE 198 01 803 A1 ist eine elektrische Rotationsmaschine mit einem feststehenden Stator und einem drehbaren Rotor bekannt. Diese weisen dabei eine Statortransformatorwicklung bzw eine Rotortransformatorwicklung auf, wobei die Transformatorwicklungen einen elektrischen Transformator bilden und jeweils für einen Betrieb mit Wechselstrom ausgeführt sind. Mittels der Transformatorwicklungen kann ein aus einem Versorgungsnetz eingespeister Drehstrom auf den drehenden Teil der Windenergieanlage übertragen werden, welcher dann der im Stator des Generators der Windenergieanlage befindlichen Drehstromgeneratorwicklung zur Erregung zugeführt wird

Aus der US 5,770,909 ist eine Synchronmaschine für elektrisch angetriebene Fahrzeuge beschrieben, mit der die Leistung des Generators für alle Fahrbedin-gungen, insbesondere über einen Drehzahlbereich von Null bis mehreren tausend Umdrehungen pro Minute optimiert werden soll. Ferner ist dort beschrieben, dass dort ein Wechselrichter im nicht-drehenden Teil der Synchronmaschine angeordnet sein kann zur Erzeugung einer Wechselspannung zur Speisung des drehenden Teils der Synchronmaschine.

Der Erfindung liegt deshalb die Aufgabe zugrunde, eine verbesserte Möglichkeit zur Übertragung der elektrischen Energie von dem nicht-drehenden Teil der Windenergieanlage auf den drehenden Teil anzugeben.

Diese Aufgabe wird erfindungsgemäß durch eine Windenergieanlage gemäβ Anspruch 1 gelöst.

Der Erfindung liegt dabei die Erkenntnis zu Grunde, dass mechanische Probleme aufgrund auftretender Reibung durch berührungslose Übertragung der elektrischen Energie vermieden werden können. Zeine einfache Möglichkeit dazu stellt die erfindungsgemäß vorgeschlagene Asynchronmaschine dar, deren Läufer mit dem drehenden Teil der Windenergieanlage, vorzugsweise mit der drehenden Nabe, verbunden ist, während deren Ständer mit dem nicht-drehenden Teil der Windenergieanlage, also dem Maschinenträger, verbunden ist Durch eine Relativbewegung wird somit zwischen Läufer und umlaufendem Ständerfeld der Asynchronmaschine ein elektrisches Feld in die Läuferwicklungen induziert und auf diese Weise eine Spannung in der Läuferwicklung hervorgerufen. Die Asynchronmaschine wird dabei generatorisch betrieben. Die in den läuferwicklungen induzierte Wechselspannung kann dann mit geeigneten weiteren Mitteln weiterverarbeitet werden zur Verwendung für den gewünschten Zweck im drehenden Teil der Windenergieanlage.

Die erfindungsgemäß vorgeschlagene Lösung zur berührungslosen Übertragung der elektrischen Energie ist in wesentlich geringerem Maße verlustbehaftet und verschleißfrei. Auch der entstehende Geräuschpegel ist drastisch reduziert, verglichen mit der bekannten Verwendung von Schleifringen.

Vorteilhafte Ausgestaltungen der Erfindung sind in den Unteransprüchen angegeben. Besonders bevorzugt wird die Erfindung bei einem etektromagnetisch erregten Synchrongenerator angewendet, um dort aus der von der Asynchronmaschine übertragenen elektrischen Energie einen Gleichstrom als Erregerstrom für den Läufer des Synchrongenerators abzuleiten. Dazu ist bevorzugt ein geeigneter Gleichrichter in dem drehenden Teil der Windenergieanlage vorgesehen, dem in einer weiteren Ausgestaltung ein LC-Filter vorgeschaltet sein kann, um Rückwirkungen des Polrades der Synchronmaschine z.B. im Oberwellenbereich zu kompensieren.

In einer weiteren vorteilhaften Ausgestaltung der Erfindung ist mindestens ein weiterer Gleichrichter vorgesehen, mit dem eine Gleichspannung oder auch ein Gleichstrom erzeugt werden kann, um weitere Einheiten an dem Rotor der Windenergieanlage mit elektrischer Energie zu versorgen. Beispielsweise sind zur Blattwinkeleinstellung der einzelnen Rotorblätter Elektromotoren vorgesehen, die mit einer Gleichspannung zu versorgen sind. Diese Versorgung ist erfindungsgemäß auf einfache Weise gelöst.

Vorzugsweise ist in dem nicht-drehenden Teil der Windenergieanlage ein Wechselrichter angeordnet, mit dem eine Wechselspannung zur Speisung des Ständers der erfindungsgemäß vorgesehenen Asynchronmaschine zur Energieübertragung erzeugt wird. Dieser Wechselrichter generiert vorzugsweise eine Wechselspannung mit einer Frequenz von ca. 400 bis 600 Hz. Mittels des Wechselrichters kann vorteilhafterweise sogar die Regelung des Erregerstroms des Läufers des Generators in Abhängigkeit von der Drehzahl und der elektrischen Leistung des Generators erfolgen. Insbesondere die Amplitude des Erregerstroms für das Polrad eines Synchrongenerators kann vorteilhaft durch den Wechselrichter geregelt werden.

Für manche Zwecke innerhalb des Rotors der Windenergieanlage ist es erforderlich, dass eine möglichst konstante Gleichspannung vorliegt. Dazu kann neben einem Gleichrichter auch eine Kapazität vorgesehen sein, die die Ausgangsspannung des Gleichrichters noch zusätzlich glättet. Um diese Kapazität immer wieder auf den Spitzenwert aufzuladen, kann deshalb vorgesehen sein, dass der Wechselrichter periodisch einen Spannungspuls erzeugt. Gleichzeitig dient die Kapazität als Zwischenspeicher, um auch bei Ausfall der Stromversorgung ausreichend elektrische Energie wenigstens für einen Not-Verstellvorgang bereitzustellen.

Da die Asynchronmaschine vorteilhaft bei einer Frequenz von 400 bis 600 Hz betrieben wird und da von der Primärwicklung zur Sekundärwicklung ein Luftspalt vorhanden ist, hat die Asynchronmaschine einen sehr hohen Blindstrombedarf. Dieser Blindstrom kann erfindungsgemäß dadurch bereitgestellt werden, dass dem Ständer der Asynchronmaschine ein LC-Filter zur Einstellung des Blindstromes des dem Ständer zugeführten Stromes vorgeschaltet ist.

Die Erfindung wird nachfolgend anhand der Zeichnungen näher erläutert. Es zeigen:
- Figur 1:: ein Schaltungsdiagramm der erfindungsgemäßen Lösung und
- Figur 2:: den Verlauf der Spannung eines Wechselrichters zur Speisung der Asynchronmaschine.

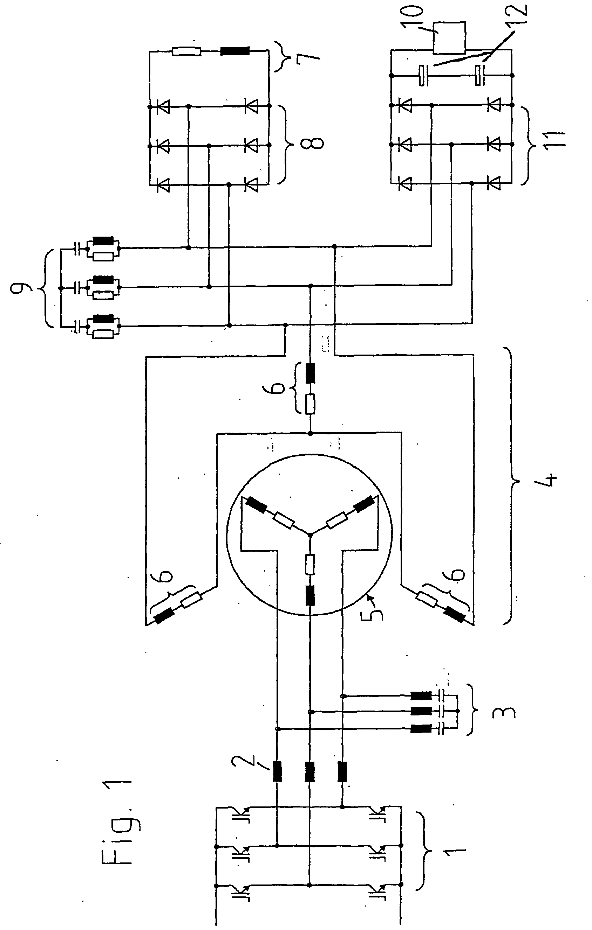

Das Schaltungsdiagramm in Figur 1 zeigt die erfindungsgemäße Lösung zur berührungslosen Übertragung elektrischer Energie von dem nicht-drehenden Teil der Windenergieanlage auf den drehenden Teil. Dazu ist zunächst ein Wechselrichter 1 vorgesehen, der eine Wechselspannung mit einer Frequenz von 400 bis 600 Hz, bevorzugt etwa 500 Hz, generiert. In den Verbindungsleitungen zwischen dem Wechselrichter 1 und dem Ständer 5 der Asynchronmaschine 4 sind Längsdrosseln 2 sowie in Sternschaltung verbundene LC-Filter 3 vorhanden. Die von dem Wechselrichter 1 erzeugte und mittels der Längsdrosseln 2 geglättete Wechselspannung wird somit in den nicht rotierenden Ständer 5 der Asynchronmaschine 4 eingespeist. Durch das in den Ständerwicklungen umlaufende Ständerfeld wird in den Sekundärwicklungen des Läufers 6 ein elektrisches Feld aufgrund der Relativbewegung zwischen Läufer und Ständerfeld induziert und somit eine Spannung in den Läuferwicklungen hervorgerufen.

Der sich drehende Läufer 6 ist mit der Nabe der Windenergieanlage mechanisch verbunden. Die elektrische Energie kann somit von dem stehenden Teil, also dem Maschinenträger der Windenergieanlage, auf den drehenden Teil, den Rotorkopf, berührungslos übertragen werden.

Die in den Läufer 6 induzierte Wechselspannung wird einerseits einem Gleichrichter 8 zugeführt, der diese Wechselspannung gleichrichtet und dem Polrad 7 des elektromagnetisch erregten Synchrongenerators der Windenergieanlage zuführt. Der Gleichrichter 8 hat somit eine induktive Last, und die am Polrad 7 wirkende Spannung ist der Effektivwert der Spannung. Bevorzugt regelt der Wechselrichter 1 die Ausgangsspannung so, dass die effektive Spannung am Ausgang des Gleichrichters 8 den gewünschten Gleichstrom für das Polrad 7 fließen lässt. Die große Induktivität des Polrades 7 glättet dabei den Strom und gleicht die Welligkeit der Ausgangsspannung des Gleichrichters 8 aus. Wenn der Wechselrichter 1 kurzzeitig hohe Spannungen erzeugt, so werden diese von der Induktivität des Polrades 7 ausgeglichen, wenn danach eine kleinere Spannung erzeugt wird. Es ist somit also möglich, mit der Asynchronmaschine 4 in Verbindung mit dem Gleichrichter 8 einen geregelten Gleichstrom für das Polrad 7 zu erzeugen. Die Amplitude des Erregerstromes für das Polrad 7 soll dabei in Abhängigkeit der Drehzahl und der elektrischen Leistung des Synchrongenerators vom Wechselrichter 1 geregelt werden.

Die in den Läufer 6 induzierte Wechselspannung kann auch für weitere Zwecke auf dem drehenden Teil der Windenergieanlage verwendet werden. So benötigt beispielsweise eine Rotorblattverstelleinheit 10 eine Gleichspannung. Diese Gleichspannung wird aus der Wechselspannung des Läufers 6 von einem Gleichrichter 11 erzeugt. Diese Gleichspannung ist von der Amplitude der Ausgangsspannung des Läufers 6 abhängig, da es sich hierbei um eine Spitzenwertgleichrichtung handelt.

Die Kondensatoren 12 werden-stets aufgeladen. Dabei ist die Kapazität der Kondensatoren 12 so bemessen, dass die gespeicherte Strommenge ausreicht, um bei Stromausfall die Rotorblattverstelleinheit 10 jedes Rotorblattes zu betätigen, um eine Notabschaltung der Windenergieanlage und Verdrehen der Rotorblätter in Fahnenstellung sicher ausführen zu können.

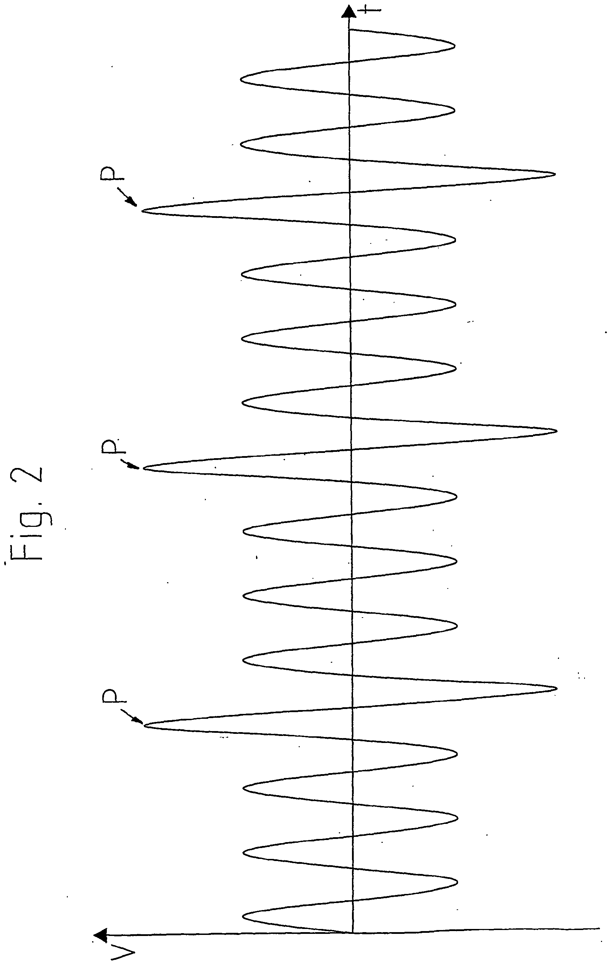

Der in Form einer Asynchronmaschine gebildete Überträger 4 liefert somit berührungslos elektrische Energie an den drehenden Teil der Windenergieanlage, die einerseits das Polrad des Generators mit einem Gleichstrom versorgt und andererseits auch weitere elektrische Einheiten wie die Rotorblattverstelleinheit mit einer Gleichspannung versorgt. Der Wechselrichter 1 erzeugt dazu periodisch einen Spannungspuls, der die Kondensatoren 12 immer wieder auf den Spitzenwert auflädt. Ein solcher Spannungsverlauf der Ausgangsspannung des Wechselrichters 1 ist in Figur 2 gezeigt. Deutlich erkennbar sind die periodischen Spannungspulse P zum Aufladen der Kondensatoren 12 auf die erforderliche Spannung. Es hat sich jedoch auch gezeigt, dass diese Spitzen nicht erforderlich sind, sondern dass die Kondensatoren auch ohne diese Spitzen auf eine ausreichend hohe Spannung aufgeladen werden, um den Blattverstellantrieb zu betätigen.

Die Asynchronmaschine 4 wird vorzugsweise mit einer Frequenz von ca. 500 Hz betrieben und hat von der Primärwicklung zur Sekundärwicklung einen Luftspalt. Diese beiden Bedingungen erfordern einen sehr hohen Blindstrombedarf. Das LC-Filter 3 soll diesen hohen Blindstrom erzeugen. Das dem Gleichrichter 8 nachgeschaltete Polrad 7 benötigt ebenfalls einen sehr hohen Blindstrom. Dieser besteht zum Teil aus der Grundschwingung und den Oberschwingungen wie zum Beispiel der fünften, siebten, elften und dreizehnten Oberschwingung. Das LC-Filter 9, bestehend aus drei in Stern geschalteten Zweigen mit jeweils einer Serienschaltung aus einer Kapazität und einer Parallelschaltung aus Widerstand und Induktivität, soll diese Blindleistung liefern. Insgesamt wird durch die beiden Filter 3 und 9 der Wirkungsgrad der Energieübertragung enorm verbessert.

Durch die erfindungsgemäße Lösung kann somit auf einfache Weise berührungslos Energie vom nicht-drehenden Teil in den drehenden Teil der Windenergieanlage für unterschiedliche Zwecke übertragen werden. Es treten dabei weder Verschleiß noch hohe Geräuschbelastungen auf.

## Patentansprüche

1. Windenergieanlage zur Erzeugung einer sinusförmigen Wechselspannung mit einem einen Läufer und einen Stator aufweisenden Generator, mit einem Rotor mit Rotorblättern, der mit dem Läufer verbunden ist, und mit Energieübertragungsmitteln zur Übertragung von elektrischer Energie vom nicht-drehenden Teil der Windenergieanlage auf den Rotor,
**dadurch gekennzeichnet, dass** die Energieübertragungsmittel eine Asynchronmaschine (4), deren Ständer (5) an dem nicht-drehenden Teil der Windenergieanlage und deren Läufer (6) an dem Rotor angeordnet ist, zur berührungslosen Übertragung elektrischer Energie auf den Rotor aufweist und dass in dem nicht-drehenden Teil der Windenergieanlage ein Wechselrichter (1) angeordnet ist zur Erzeugung einer Wechselspannung zur Speisung des Ständers (5) der Asynchronmaschine (4) und dass der Wechselrichter zur periodischen Erzeugung eines dieser Wechselspannung überlagerten Spannungspulses ausgestaltet ist.

2. Windenergieanlage nach Anspruch 1,
**dadurch gekennzeichnet, dass** der Generator ein elektromagnetisch erregter Synchrongenerator ist und dass an dem Rotor ein Gleichrichter (8) vorgesehen ist zur Umwandlung der auf den Läufer der Asynchronmaschine (4) übertragenen elektrischen Energie in einen Gleichstrom, welcher dem Läufer des Generators als Erregerstrom zugeführt wird.

3. Windenergieanlage nach Anspruch 2,
**dadurch gekennzeichnet, dass** dem Gleichrichter (8) ein Filter zur Einstellung des Blindstroms vorgeschaltet ist.

4. Windenergieanlage nach einem der vorhergehenden Ansprüche,
**dadurch gekennzeichnet, dass** an dem Rotor ein Gleichrichter (11) vorgesehen ist zur Umwandlung der auf den Läufer der Asynchronmaschine übertragenen elektrischen Energie in eine Gleichspannung, insbesondere zur Versorgung einer Rotorblattwinkeleinstelleinheit (10).

5. Windenergieanlage nach einem der vorstehenden Ansprüche,
**dadurch gekennzeichnet, dass** der Wechselrichter (1) ausgestaltet ist zur Regelung des Erregerstroms des Läufers des Generators in Abhängigkeit von der Drehzahl und der elektrischen Leistung des Generators.

6. Windenergieanlage nach einem der vorhergehenden Ansprüche,
**dadurch gekennzeichnet, dass** dem Ständer (5) des Asynchrongenerators (4) ein LC-Filter (3) zur Einstellung des Blindstroms des dem Ständer (5) zugeführten Stroms vorgeschaltet ist.

7. Windenergieanlage nach Anspruch 4,
**dadurch gekennzeichnet, dass** mit dem Gleichrichter (11) Kondensatoren (12) elektrisch gekoppelt sind, die von der erzeugten Gleichspannung aufgeladen werden und deren Kapazität so bemessen ist, dass die gespeicherte Strommenge ausreicht, um bei Stromausfall die Rotorblattwinkeleinstelleinheit (10) jedes Rotorblattes zu betätigen, um eine Notabschaltung der Windenergieanlage und ein Verdrehen der Rotorblätter in Fahnenstellung ausführen zu können.

## Claims

1. A wind power installation for generating a sinusoidal ac voltage, comprising a generator having a generator rotor and a generator stator, a rotor unit with rotor blades which is connected to the generator rotor, and power transmission means for transmission of electric power from the non-rotating part of the wind power installation to the rotor unit, **characterised in that** the power transmission means have an asynchronous machine (4) whose stator (5) is disposed on the non-rotating part of the wind power installation and whose rotor (6) is disposed on the rotor unit, for contactless transmission of electric power to the rotor unit, and an inverter (1) is disposed in the non-rotating part of the wind power installation, for generating an ac voltage for feeding the stator (5) of the asynchronous machine (4), and the inverter is configured to periodically generate a voltage pulse superimposed on that ac voltage.

2. A wind power installation according to claim 1,
**characterised in that** the generator is an electromagnetically excited synchronous generator and that provided at the rotor unit is a rectifier (8) for conversion of the electric power transmitted to the rotor of the asynchronous machine (4) into a direct current which is supplied to the rotor of the generator as exciter current.

3. A wind power installation according to claim 2,
**characterised in that** a filter for adjusting the reactive current is connected upstream of the rectifier (8).

4. A wind power installation according to any one of the preceding claims,
**characterised in that** a rectifier (11) is provided at the rotor unit, for converting the electric power transmitted to the rotor of the asynchronous machine into a dc voltage, especially for supplying a rotor blade angle adjustment unit (10).

5. A wind power installation according to any one of the preceding claims,
**characterised in that** the inverter (1) is configured to regulate the exciter current of the rotor of the generator in dependence on the rotary speed and the electric power of the generator.

6. A wind power installation according to any one of the preceding claims,
**characterised in that** connected upstream of the stator (5) of the asynchronous generator (4) is an LC filter (3) for adjusting the reactive current of the current supplied to the stator (5).

7. A wind power installation according to claim 4,
**characterised in that** capacitors (12) are electrically coupled to the inverter (11), which are charged by the generated dc voltage and the capacitance of which is such that the stored amount of current is sufficient to operate the rotor blade angle adjustment unit (10) of each rotor blade in the event of power failure, in order to be able to carry out emergency shutdown of the wind power installation and rotation of the rotor blades into the feathered position.

## Revendications

1. Installation d'énergie éolienne pour la production d'une tension alternative sinusoïdale avec un générateur présentant un induit et un stator, avec un rotor doté de lames de rotor, qui est relié à l'induit, et avec des moyens de transmission de l'énergie pour la transmission d'énergie électrique de la partie non rotative de l'installation d'énergie éolienne sur le rotor,
**caractérisée en ce que** les moyens de transmission de l'énergie présentent une machine asynchrone (4) dont le stator (5) est disposé sur la partie non rotative de l'installation d'énergie éolienne et dont l'induit (6) est disposé sur le rotor en vue de la transmission sans contact de l'énergie électrique sur le rotor et que, dans la partie non rotative de l'installation d'énergie éolienne, est disposé un onduleur (1) pour la production d'une tension alternative en vue de l'alimentation du stator (5) de la machine asynchrone (4) et que l'onduleur est conçu pour la production périodique d'une impulsion de tension superposée sur cette tension alternative.

2. Installation d'énergie éolienne selon la revendication 1,
**caractérisée en ce que** le générateur est un générateur synchrone excité électromagnétiquement et qu'il est prévu sur le rotor un redresseur (8) en vue de la conversion de l'énergie électrique transmise sur l'induit de la machine asynchrone (4) en un courant continu qui est amené à l'induit du générateur comme courant d'excitation.

3. Installation d'énergie éolienne selon la revendication 2,
**caractérisée en ce qu'**un filtre pour le réglage du courant déwatté est monté en amont du redresseur (8).

4. Installation d'énergie éolienne selon l'une des revendications précédentes,
**caractérisée en ce qu'**un redresseur (11) est prévu sur le rotor pour la conversion de l'énergie électrique transmise sur l'induit de la machine asynchrone en une tension continue, en particulier pour l'alimentation d'une unité de réglage de l'angle des lames de rotor (10).

5. Installation d'énergie éolienne selon l'une des revendications précédentes,
**caractérisée en ce que** l'onduleur (11) est conçu pour le réglage du courant d'excitation de l'induit du générateur en fonction de la vitesse de rotation et de la puissance électrique du générateur.

6. Installation d'énergie éolienne selon l'une des revendications précédentes,
**caractérisée en ce qu'**un filtre LC pour le réglage du courant déwatté du courant amené au stator (5) est monté en amont du stator (5) du générateur asynchrone (4).

7. Installation d'énergie éolienne selon la revendication 4,
**caractérisée en ce qu'**il est couplé au redresseur (11) des condensateurs (12) qui sont chargés par la tension continue produite et dont la capacité est dimensionnée de telle sorte que la quantité de courant stockée suffise pour actionner l'unité de réglage de l'angle des lames du rotor (11) de chaque lame de rotor en cas de panne de courant afin de pouvoir procéder à un arrêt d'urgence de l'installation d'énergie éolienne et une rotation des lames du rotor en position de mise en drapeau.
